# FASCICULE DE BREVET EUROPEEN

(11) **EP 4 437 376 B1**
(45) Date de publication et mention de la délivrance du brevet: **14.01.2026**
(21) Numéro de dépôt: 22818805.8
(22) Date de dépôt: 21.11.2022
(51) Int. Cl.: G02B 13/16, G02B 13/00

(54) **DISPOSITIF OPTIQUE DE PROJECTION À TROIS LENTILLES**
OPTISCHES PROJEKTIONSGERÄT MIT DREI LINSEN
PROJECTION OPTICAL DEVICE WITH THREE LENSES

(30) Priorité: 25.11.2021 FR 2112549
(43) Date de publication de la demande: 02.10.2024
(73) Titulaire: Valeo Vision, 93012 Bobigny Cedex (FR)
(72) Inventeur: PAUL, Baptiste, 93012 Bobigny Cedex (FR)
(74) Mandataire: Valeo Visibility
(86) Numéro de dépôt international: PCT/EP2022/082674
(87) Numéro de publication internationale: WO 2023/094332

(56) Documents cités:
- EP-A2- 0 493 800
- JP-A- 2017 009 778
- JP-A- 2021 081 663

## Description

### DOMAINE TECHNIQUE

La présente invention concerne le domaine de l'éclairage et/ou de la signalisation et les organes, notamment optiques, qui y participent. Elle trouve pour application particulièrement avantageuse le domaine des véhicules automobiles.

### ETAT DE LA TECHNIQUE

Dans le secteur de l'automobile, on connait des dispositifs susceptibles d'émettre des faisceaux lumineux, encore appelés fonctions d'éclairage et/ou de signalisation, répondant en général à des réglementations

Récemment, on a développé des technologies permettant de produire un faisceau segmenté, aussi appelé pixélisé, pour réaliser des fonctions d'éclairage avancées. C'est notamment le cas pour une fonction d'éclairage de type «route complémentaire » généralement basée sur une pluralité d'unités d'illumination comportant chacune une diode électroluminescente, diodes qui peuvent être pilotées individuellement. Ce faisceau peut, notamment, servir à compléter l'éclairage d'un faisceau de type code, pour former globalement un éclairage de type route.

Le faisceau résultant des différents segments de faisceau issus de chacune des diodes, est projeté au moyen d'un système optique de projection comprenant plusieurs lentilles. Par exemple, on peut produire un faisceau complémentaire, associé à un faisceau de base totalement ou pour le moins majoritairement projeté en dessous d'une ligne horizontale de coupure du type utilisé pour la fonction de feu de croisement, le faisceau complémentaire s'additionnant au faisceau de base de sorte à le compléter au-dessus de la ligne de coupure ; avantageusement, ce faisceau complémentaire est adaptatif pour allumer ou éteindre certaines parties du faisceau global projeté, par exemple pour des fonctions anti-éblouissement. L'acronyme ADB (pour Adaptative Driving Beam signifiant faisceau de route adaptatif) est utilisé pour ce type de fonction.

Dans la présente description, on appelle faisceau segmenté, un faisceau dont la projection forme une image composée de segments de faisceau, chaque segment pouvant être allumé de manière indépendante. On peut employer une source de lumière pixélisée pour former ces segments. Une telle source comprend une pluralité d'éléments émissifs activables sélectivement. Les éléments émissifs sont typiquement placés les uns à côté des autres sur un support, avec un certain pas.

Pour atteindre une qualité suffisante de projection de la lumière issue des éléments émissifs, on utilise actuellement des trains de lentilles permettant de réduire les effets de chromatisme en bordure des pixels éteints tout en présentant un rendement aussi élevé que possible avec une netteté suffisante. Un dispositif de projection de lumière utilisant une source de lumière pixelisée comprenant une pluralité d'éléments émissifs activables sélectivement est connu de la publication JP 2017 009778 A.

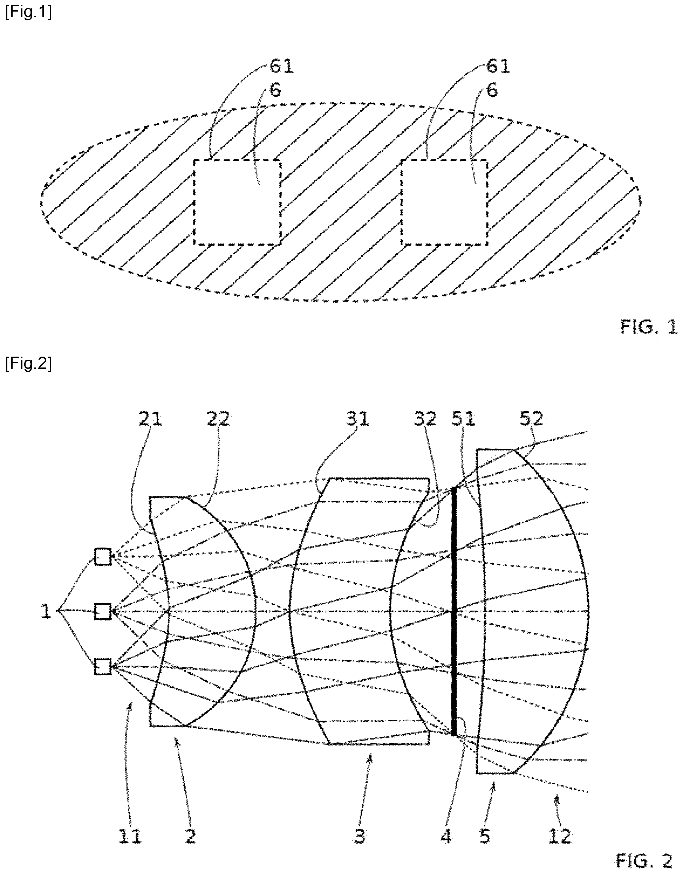

La figure 1 donne une illustration très schématique d'une zone illuminée en avant d'un véhicule (portion hachurée) au sein de laquelle deux zones non éclairées 6 ont été formées par inactivation d'au moins un élément émissif pour chacune de ces deux zones 6. Typiquement, le traitement optique de la lumière doit permettre d'éviter ou de limiter les effets de chromatisme sur la bordure 61 des zones 6 (dans le cas contraire, l'observateur de la scène éclairée constatera un bord coloré indésirable qui peut même être incompatible avec des normes de faisceaux) ; dans le même temps, il convient que la projection de chacun des pixels soit aussi nette que possible pour que le contour 61 des zones 6 ne soit pas perçu comme flou. Ces exigences optiques impliquent actuellement d'avoir recours à des systèmes de lentilles relativement complexes.

Un objet de la présente invention est notamment de proposer une solution à ce problème, en autorisant des résolutions et des corrections de chromatisme satisfaisantes tout en mettant en œuvre des dispositifs moins complexes, notamment pour des faisceaux ADB.

Les autres objets, caractéristiques et avantages de la présente invention apparaîtront à l'examen de la description suivante et des dessins d'accompagnement. Il est entendu que d'autres avantages peuvent être incorporés.

### RESUME

Pour atteindre cet objectif, selon un mode de réalisation on prévoit un dispositif optique de projection de faisceaux lumineux apte à coopérer avec une source de lumière pixelisée comprenant une pluralité d'éléments émissifs activables sélectivement, caractérisé en ce qu'il consiste en, successivement dans le sens du trajet de rayons lumineux issus de la source : une première lentille convergente, une deuxième lentille divergente ou neutre, une pupille et une troisième lentille convergente.

Ainsi, on produit un faisceau segmenté, issu de la projection lumineuse dérivant de la pluralité d'éléments émissifs, avec un nombre réduit de lentilles (limité, de manière surprenante, au nombre de trois) mais en respectant des conditions satisfaisantes de traitement optique en ce qui concerne la netteté de la projection et la limitation des effets chromatiques en bordure de zones éteintes.

Le fait de placer la pupille entre la deuxième lentille et la troisième lentille permet d'avoir plus de rayons lumineux projetés par le dispositif optique, et en conséquent une intensité lumineuse élevée de l'image projetée. A titre d'exemple, le dispositif optique peut présenter une ouverture numérique N inférieure ou égale à 0,7, voire inférieure à 0,5.

De manière facultative, la pupille est disposée avec un écartement peu différent vis-à-vis de la face de sortie de la deuxième lentille et de la face d'entrée de la troisième lentille. Dans cette configuration, en effet, la netteté de la projection est améliorée. D'une manière générale, la combinaison formée par la deuxième lentille et la troisième lentille assure par ailleurs de manière avantageuse une correction au moins partiel des effets de chromatisme.

Un autre aspect concerne un module comprenant le dispositif et une source de lumière pixelisée dotée d'une pluralité d'éléments émissifs activables sélectivement, et configuré pour émettre un faisceau lumineux segmenté.

Un autre aspect est relatif à un véhicule automobile équipé d'au moins un système et/ou d'au moins un dispositif optique.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
[Fig.1] La figure 1 représente un exemple de projection dans un plan d'un faisceau lumineux, avec des zones non éclairées.
[Fig.2] La figure 2 représente un premier exemple de réalisation de l'invention.
[Fig.3] La figure 3 représente un autre mode de réalisation.
[Fig.4] La figure 4 montre une autre variante de réalisation.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
- la première lentille 2 est une lentille ménisque ;
- la deuxième lentille 3 présente une face de sortie 32 ayant un centre localisé sur l'axe optique du dispositif, dans lequel la troisième lentille 5 présente une face d'entrée 51 ayant un centre localisé sur l'axe optique du dispositif, et dans lequel la pupille 4 est disposée de manière à ne pas être au contact de la face de sortie 32 de la deuxième lentille 3 et de la face d'entrée 51 de la troisième lentille 5 ;
- la pupille 4 est disposée à une distance du centre de la face de sortie 32 de la deuxième lentille 3 comprise entre 25% et 75% de la distance entre le centre de la face de sortie 32 et le centre de la face d'entrée 51 de la troisième lentille 5 ;
- la pupille 4 est disposée à une distance du centre de la face de sortie 32 de la deuxième lentille 3 comprise entre 45% et 55% de la distance entre le centre de la face de sortie 32 et le centre de la face d'entrée 51 de la troisième lentille 5 ;
- la pupille est au contact de la bordure de la face de sortie 32 de la deuxième lentille 3 ;
- la première lentille 2 comprend une face d'entrée recevant directement la lumière de la source de lumière pixélisée ;
- la deuxième lentille 3 est une lentille ménisque ;
- la troisième lentille 5 est configurée pour produire une projection du faisceau lumineux segmenté en avant d'un véhicule ;
- la troisième lentille 5 est une lentille à indice de réfraction homogène.
- Module comprenant une unité de pilotage de l'activation de chacun des éléments émissifs, configurée pour produire au moins une zone sombre dans un faisceau projeté par désactivation d'un groupe d'éléments émissifs adjacents, l'unité de pilotage étant configurée pour déterminer le nombre d'éléments émissifs du groupe d'éléments émissifs adjacents correspondant à la zone sombre en fonction de la dimension en largeur des éléments émissifs.
- le faisceau lumineux réalise au moins une partie d'un faisceau global de type feu de route.
- la deuxième lentille 3 est en verre de type Flint ;
- la troisième lentille 5 est en verre de type Crown ;
- la première lentille 2 est en verre de type Crown ;
- la pluralité d'éléments émissifs 1 forme une matrice rectangulaire, la dimension longue de la matrice rectangulaire étant dirigée suivant une dimension en largeur du faisceau, et de préférence dans lequel la dimension en largeur est dirigée suivant la ligne d'horizon.

Le système selon l'invention peut comprendre une unité de pilotage de l'activation de chacun des éléments émissifs, configurée pour produire au moins une zone sombre formant un tunnel dans un faisceau projeté par désactivation d'un groupe d'éléments émissifs adjacents, l'unité de pilotage étant configurée pour déterminer le nombre d'éléments émissifs du groupe d'éléments émissifs adjacents correspondant à la zone sombre en fonction de la dimension en largeur des éléments émissifs.

L'unité de pilotage peut comprendre un produit programme d'ordinateur, de préférence stocké dans une mémoire non transitoire, dans lequel le produit programme d'ordinateur comprend des instructions qui, lorsqu'elles sont exécutées par un processeur, permettent de déterminer les éléments émissifs à activer, en particulier pour obtenir au moins une zone sombre (dans laquelle les éléments ne sont pas activés) d'une surface déterminée en tenant compte de la surface variable des images des éléments.

Dans les caractéristiques exposées ci-après, des termes relatifs à la verticalité, l'horizontalité et à la transversalité (ou encore direction latérale), ou leurs équivalents, s'entendent par rapport à la position dans laquelle le système d'éclairage est destiné à être monté dans un véhicule. Les termes « vertical » et « horizontal » sont utilisés dans la présente description pour désigner des directions, suivant une orientation perpendiculaire au plan de l'horizon pour le terme « vertical » (qui correspond à la hauteur des systèmes), et suivant une orientation parallèle au plan de l'horizon pour le terme « horizontal ». Elles sont à considérer dans les conditions de fonctionnement du dispositif dans un véhicule. L'emploi de ces mots ne signifie pas que de légères variations autour des directions verticale et horizontale soient exclues de l'invention. Par exemple, une inclinaison relativement à ces directions de l'ordre de + ou - 10° est ici considérée comme une variation mineure autour des deux directions privilégiées. Par rapport au plan horizontal, l'inclinaison est en principe comprise entre -5° et +4° et elle est comprise entre -6° et +7.5° latéralement.

Les projecteurs de véhicule automobile peuvent être munis d'un ou de plusieurs modules lumineux agencés dans un boîtier fermé par une glace de manière à obtenir un ou plusieurs faisceaux d'éclairage et/ou de signalisation à la sortie du projecteur. Un module de l'invention peut équiper un véhicule, et, de préférence, ce dernier est aussi équipé d'au moins un autre module pour la projection d'au moins un autre faisceau. Un projecteur peut aussi être complexe et associer plusieurs modules qui peuvent, en outre, éventuellement partager des composants.

L'invention peut participer à une fonction faisceau de route qui a pour fonction d'éclairer sur une large étendue la scène face au véhicule, mais également sur une distance conséquente, typiquement environ deux cents mètres. Ce faisceau lumineux, de par sa fonction d'éclairage, se situe principalement au-dessus de la ligne d'horizon. Il peut présenter un axe optique d'éclairement légèrement ascendant par exemple. Notamment, il peut servir à générer une fonction d'éclairage du type « complémentaire » qui forme une portion d'un feu de route complémentaire à celle produite par un faisceau de champ proche, le complément route cherchant en totalité ou au moins majoritairement à éclairer au-dessus de la ligne d'horizon alors que le faisceau de champ proche (qui peut présenter les spécificités d'un feu de croisement) cherche à éclairer en totalité ou au moins majoritairement en dessous de la ligne d'horizon.

Le dispositif peut aussi servir à former d'autres fonctions d'éclairage via ou en dehors de celles décrites précédemment en relation aux faisceaux adaptatifs.

On notera que la pluralité d'éléments émissifs peut être commandée de sorte à les activer sélectivement. Cela signifie que tous les éléments émissifs ne sont pas forcément simultanément actifs, c'est-à-dire émissifs de lumière. Cette fonction permet de moduler la forme du faisceau rendu. Dans le cas où un élément émissif n'est pas activé, son image, telle que projetée par le dispositif optique sera nulle. Elle forme alors un vide d'éclairage dans le faisceau global résultant. Ce vide s'entend aux phénomènes de couplage au niveau de la source et des effets des lumières parasites de l'optique près.

La source comprend de préférence un support dont une face porte des éléments émissifs 1 activables sélectivement, par exemple sur la base de technologies LED, comme détaillées plus loin.

La source lumineuse est avantageusement une matrice d'éléments émissifs 1 centrée sur, et perpendiculaire à, l'axe optique du dispositif optique qui le suit, ici représenté par un groupe de trois lentilles. L'axe optique peut être orienté sensiblement horizontalement.

La source de lumière peut notamment être conçue sous la forme d'une matrice d'éléments émissifs dont l'activation peut être pilotée de manière individuelle, pour éteindre ou allumer l'un quelconque des éléments émissifs. On fait ainsi varier, avec une très large flexibilité, la forme du faisceau résultant.

De façon connue en soi, la présente invention peut utiliser des sources lumineuses du type diodes électroluminescentes encore communément appelées LEDs. Il peut éventuellement s'agir de LED(s) organique(s). Notamment, ces LEDs peuvent être dotées d'au moins une puce utilisant la technologie des semi-conducteurs et apte à émettre une lumière. Par ailleurs, le terme source lumineuse s'entend ici d'un ensemble d'au moins une source élémentaire telle une LED apte à produire un flux conduisant à générer en sortie du module de l'invention au moins un faisceau lumineux. Dans un mode avantageux, la face de sortie de la source est de section rectangulaire, ce qui est typique pour des puces de LEDs.

De préférence, la source électroluminescente comprend au moins une matrice d'éléments électroluminescents monolithique, aussi appelée matrice monolithique. Dans une matrice monolithique, les éléments électroluminescents ont crû depuis un substrat commun, ou ont été reportés sur celui-ci, et sont connectés électriquement de manière à être activables sélectivement, individuellement ou par sous-ensembles d'éléments électroluminescents. Le substrat peut être majoritairement en matériau semi-conducteur. Le substrat peut comporter un ou plusieurs autres matériaux, par exemple non semi-conducteurs. Ainsi chaque élément électroluminescent ou groupe d'éléments électroluminescents peut former un pixel lumineux et peut émettre de la lumière lorsque son ou leur matériau est alimenté en électricité. La configuration d'une telle matrice monolithique permet l'agencement de pixels activables sélectivement très proches les uns des autres, par rapport aux diodes électroluminescentes classiques destinées à être soudées sur des plaques de circuits imprimés. La matrice monolithique au sens de l'invention comporte des éléments électroluminescents dont une dimension principale d'allongement, à savoir la hauteur, est sensiblement perpendiculaire à un substrat commun, cette hauteur étant au plus égale au micromètre.

Avantageusement, la ou les matrices monolithiques aptes à émettre des rayons lumineux peuvent être couplées à une unité de contrôle de l'émission lumineuse de la source pixélisée. L'unité de contrôle peut ainsi commander (on peut également dire piloter) la génération et/ou la projection d'un faisceau lumineux pixélisé par le dispositif lumineux. L'unité de contrôle peut être intégrée au dispositif lumineux. L'unité de contrôle peut être montée sur une ou plusieurs des matrices, l'ensemble formant ainsi un module lumineux. L'unité de contrôle peut comporter une unité centrale de traitement couplée avec une mémoire sur laquelle est stockée un programme d'ordinateur qui comprend des instructions permettant au processeur de réaliser des étapes générant des signaux permettant le contrôle de la source lumineuse. L'unité de contrôle peut ainsi par exemple contrôler individuellement l'émission lumineuse de chaque pixel d'une matrice. En outre, la luminance obtenue par la pluralité d'éléments électroluminescents est d'au moins 60Cd/mm², de préférence d'au moins 80Cd/mm².

L'unité de contrôle peut former un dispositif électronique apte à commander les éléments électroluminescents. L'unité de contrôle peut être un circuit intégré. Un circuit intégré, encore appelé puce électronique, est un composant électronique reproduisant une ou plusieurs fonctions électroniques et pouvant intégrer plusieurs types de composants électroniques de base, par exemple dans un volume réduit (i.e. sur une petite plaque). Cela rend le circuit facile à mettre en œuvre. Le circuit intégré peut être par exemple un ASIC ou un ASSP. Un ASIC (acronyme de l'anglais « Application-Specific Integrated Circuit ») est un circuit intégré développé pour au moins une application spécifique (c'est-à-dire pour un client). Un ASIC est donc un circuit intégré (micro-électronique) spécialisé. En général, il regroupe un grand nombre de fonctionnalités uniques ou sur mesure. Un ASSP (acronyme de l'anglais « Application Specific Standard Product ») est un circuit électronique intégré (micro-électronique) regroupant un grand nombre de fonctionnalités pour satisfaire à une application généralement standardisée. Un ASIC est conçu pour un besoin plus particulier (spécifique) qu'un ASSP. L'alimentation en électricité des matrices monolithiques est réalisée via le dispositif électronique, lui-même alimenté en électricité à l'aide par exemple d'au moins un connecteur le reliant à une source d'électricité. La source d'électricité peut être interne ou externe au dispositif selon l'invention. Le dispositif électronique alimente la source lumineuse en électricité. Le dispositif électronique est ainsi apte à commander la source lumineuse.

Selon l'invention, la source de lumière comprend de préférence au moins une matrice monolithique dont les éléments électroluminescents s'étendent en saillie d'un substrat commun. Cet arrangement d'éléments peut être issu d'une croissance sur le substrat à partir duquel ils ont crû respectivement, ou de toute autre méthode de réalisation, par exemple par report des éléments par des techniques de transfert. Différents agencements d'éléments électroluminescents peuvent répondre à cette définition de matrice monolithique, dès lors que les éléments électroluminescents présentent l'une de leurs dimensions principales d'allongement sensiblement perpendiculaire à un substrat commun et que l'écartement entre les pixels, formé par un ou plusieurs éléments électroluminescents regroupés ensemble électriquement, est faible en comparaison des écartements imposés dans des agencements connus de chips généralement carrés plates soudés sur une carte de circuits imprimés.

Notamment la source de lumière, selon un aspect de l'invention, peut comporter une pluralité d'éléments électroluminescents distincts les uns des autres et que l'on fait croitre individuellement depuis le substrat, en étant connectés électriquement pour être activables sélectivement, le cas échéant par sous-ensembles au sein desquels des bâtonnets peuvent être activés simultanément.

Selon un mode de réalisation non représenté, la matrice monolithique comprend une pluralité d'éléments électroluminescents, de dimensions submillimétriques, voire de moins de 10 µm, qui sont agencés en saillie d'un substrat de manière à former des bâtonnets de section notamment hexagonale. Les bâtonnets électroluminescents s'étendent parallèlement à l'axe optique du module lumineux quand la source de lumière est en position dans le boîtier.

Ces bâtonnets électroluminescents sont regroupés, notamment par des connexions électriques propres à chaque ensemble, en une pluralité de portions activables sélectivement. Les bâtonnets électroluminescents prennent naissance sur une première face d'un substrat. Chaque bâtonnet électroluminescent, ici formé par utilisation de nitrure de gallium (GaN), s'étend perpendiculairement, ou sensiblement perpendiculairement, en saillie du substrat, ici réalisé à base de silicium, d'autres matériaux comme du carbure de silicium pouvant être utilisés sans sortir du contexte de l'invention. A titre d'exemple, les bâtonnets électroluminescents pourraient être réalisés à partir d'un alliage de nitrure d'aluminium et de nitrure de gallium (AlGaN), ou à partir d'un alliage de phosphures d'aluminium, d'indium et de gallium (AlInGaP). Chaque bâtonnet électroluminescent s'étend selon un axe d'allongement définissant sa hauteur, la base de chaque bâtonnet étant disposée dans un plan de la face supérieure du substrat.

Selon un autre mode de réalisation non représenté, la matrice monolithique peut comporter des éléments électroluminescents formés par des couches d'éléments électroluminescents épitaxiées, notamment une première couche en GaN dopée n et une seconde couche en GaN dopée p, sur un substrat unique, par exemple en carbure de silicium, et que l'on découpe (par meulage et/ou ablation) pour former une pluralité de pixels respectivement issus d'un même substrat. Il résulte d'une telle conception une pluralité de blocs électroluminescents tous issus d'un même substrat et connectés électriquement pour être activables sélectivement les uns des autres.

Dans un exemple de réalisation selon cet autre mode, le substrat de la matrice monolithique peut présenter une épaisseur comprise entre 100 µm et 800 µm, notamment égale à 200 µm ; chaque bloc peut présenter une longueur et une largeur, chacune étant comprise entre 50 µm et 500 µm, préférentiellement comprise entre 100 µm et 200 µm. Dans une variante, la longueur et la largeur sont égales. La hauteur de chaque bloc est inférieure à 500 µm, préférentiellement inférieure à 300 µm. Enfin la surface de sortie de chaque bloc peut être faite via le substrat du côté opposé à l'épitaxie. La distance de séparation des pixels contigus peut être inférieure à 1 µm, notamment inférieure à 500 µm, et elle est préférentiellement inférieure à 200 µm.

Selon un autre mode de réalisation non représenté, aussi bien avec des bâtonnets électroluminescents s'étendant respectivement en saillie d'un même substrat, tels que décrits ci-dessus, qu'avec des blocs électroluminescents obtenus par découpage de couches électroluminescentes superposées sur un même substrat, la matrice monolithique peut comporter en outre une couche d'un matériau polymère dans laquelle les éléments électroluminescents sont au moins partiellement noyés. La couche peut ainsi s'étendre sur toute l'étendue du substrat ou seulement autour d'un groupe déterminé d'éléments électroluminescents. Le matériau polymère, qui peut notamment être à base de silicone, crée une couche protectrice qui permet de protéger les éléments électroluminescents sans gêner la diffusion des rayons lumineux. En outre, il est possible d'intégrer dans cette couche de matériau polymère des moyens de conversion de longueur d'onde, et par exemple des luminophores, aptes à absorber au moins une partie des rayons émis par l'un des éléments et à convertir au moins une partie de ladite lumière d'excitation absorbée en une lumière d'émission ayant une longueur d'onde différente de celle de la lumière d'excitation. On pourra prévoir indifféremment que les luminophores sont noyés dans la masse du matériau polymère, ou bien qu'ils sont disposés en surface de la couche de ce matériau polymère. On pourra aussi déposer sous vide les phosphores sur les puces semi-conductrices, sans la couche polymère. La source de lumière peut comporter en outre un revêtement de matériau réfléchissant pour dévier les rayons lumineux vers les surfaces de sortie de la source pixélisée.

Les éléments électroluminescents de dimensions submillimétriques définissent dans un plan, sensiblement parallèle au substrat, une surface de sortie déterminée. On comprend que la forme de cette surface de sortie est définie en fonction du nombre et de l'agencement des éléments électroluminescents qui la composent. On peut ainsi définir une forme sensiblement rectangulaire de la surface d'émission, étant entendu que celle-ci peut varier et prendre n'importe quelle forme sans sortir du contexte de l'invention.

Il n'est pas exclu que les éléments émissifs 1 activables sélectivement soient des sources lumineuses secondaires.

La figure 1 montre un exemple de projection pouvant être obtenue grâce à l'invention, avec une netteté suffisante et un contour 61 suffisamment peu coloré (proche de la couleur, blanche, de la source).

Pour parvenir à un tel résultat, un premier mode de réalisation d'un module optique est présenté à la figure 2. Le trajet des rayons lumineux, de gauche à droite, est initiée par la génération de rayons 11 par les éléments émissifs 1 de la source, formant de préférence une matrice de pixels.

À titre d'exemple, la matrice de pixels de la source 1 peut présenter une forme rectangulaire allongée, astucieusement disposée suivant la direction horizontale.

La figure 2 montre que les rayons 11 entrent dans une première lentille 2 du dispositif optique par une face d'entrée 21. Dans cet exemple, la première lentille 2 est du type ménisque et comprend donc des faces 21, 22 de même direction de courbure. Ici, la face d'entrée 21 et concave est la face de sortie 22 convexe. La première lentille 2 est de nature convergente et elle est configurée pour diriger les rayons lumineux qu'elle transmet vers une deuxième lentille 3 espacée de la première lentille 2.

La deuxième lentille 3 est avantageusement divergente, mais elle peut être faiblement divergente, voire optiquement neutre. Dans le cas de la figure 2, la face d'entrée 31 est convexe et sa face de sortie 32 concave.

Suivant le trajet des rayons lumineux, la deuxième lentille 3 est suivie par une pupille 4. Cette dernière a la fonction d'un diaphragme d'ouverture de préférence fixe (de sorte à former un arrêt périphérique des rayons) et définit une ouverture de passage de rayons en direction d'une troisième lentille 5. Avantageusement, la pupille 4 s'étend suivant un plan perpendiculaire à l'axe optique. Dans l'exemple représenté, la pupille 4 est éloignée de la face de sortie 32 de la deuxième lentille 3 et de la face d'entrée 51 de la troisième lentille 5. On privilégie en effet une situation intermédiaire de la pupille 4 pour accroître la netteté.

La troisième lentille est pour sa part une lentille convergente. Dans le cas de la figure 2, sa face d'entrée 51 est concave et sa face de sortie 52 convexe. De préférence, les rayons 12 projetés par la troisième lentille 5 forment le faisceau lumineux pixelisé sortant du module et illuminant une portion d'une scène routière à l'avant (ou à l'arrière) d'un véhicule équipé du module.

De préférence, la pupille 4 a une disposition intermédiaire entre la face 32 et la face 51. Plus particulièrement, on peut s'arranger pour que le centre de la face 32 (défini comme l'intersection de cette face avec l'axe optique du dispositif optique lui-même , c'est-à-dire la ligne pointillée horizontale au milieu de la figure) et le centre de la face 51 (défini de manière similaire au centre de la face 32) détermine une distance d'écartement des lentilles au centre de leurs faces en vis-à-vis ; la pupille 4 peut être placée à une distance de la face 32 comprise entre 25 à 75% de cette distance d'écartement. Éventuellement, le caractère médian de la pupille 4 peut être plus grand, avec une distance au centre de la face 32 entre 45 et 50% de la distance d'écartement pour favoriser la netteté, mais au détriment de la compensation du chromatisme.

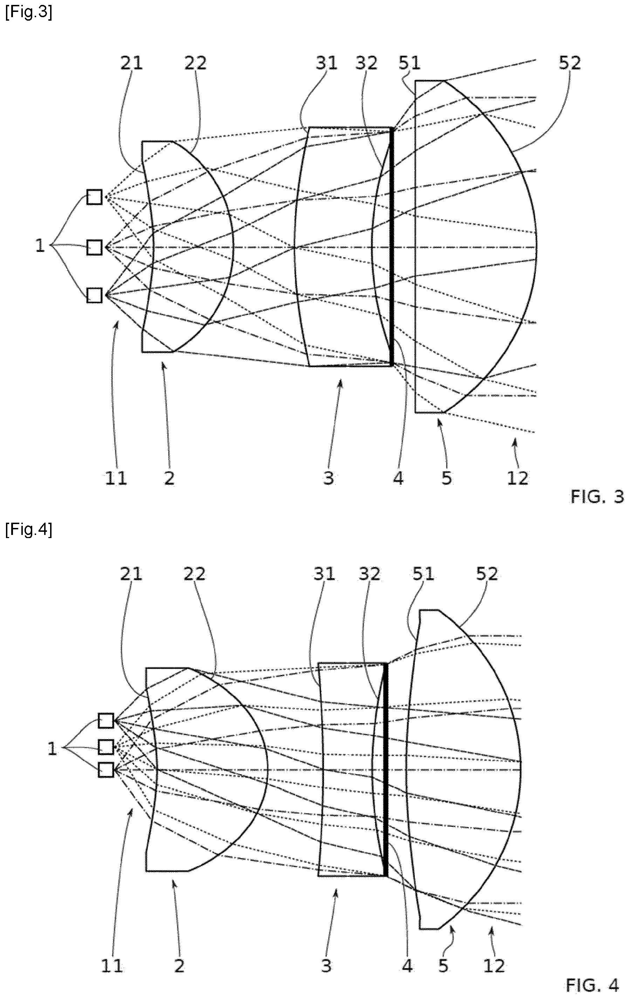

Un autre mode de réalisation du module de projection est fourni en référence à la figure 3. Elle montre de gauche à droite une source lumineuse qui peut être du type évoqué précédemment, en particulier sous la forme d'une matrice d'éléments émissifs 1, une première lentille 2, une deuxième lentille 3, une pupille 4 et une troisième lentille 5.

Cette fois, la pupille 4 est rapprochée de la face 32 de la deuxième lentille ; elle peut même être au contact de la périphérie de cette face 32. Comme dans le cas précédent, la lentille 3 est du type ménisque. La lentille 2 est du même type que dans l'exemple de la figure 2. La troisième lentille présente cette fois une face d'entrée 51 plane et une sortie convexe.

La variante de la figure 4 est peu éloignée. Comme précédemment, la pupille 4 est rapprochée de la face 32, et avantageusement à son contact. La deuxième lentille 3 est ici biconcave. À l'inverse, la troisième lentille 5 est biconvexe. La première lentille 2 est toujours une lentille ménisque.

L'association d'une source lumineuse 1 décrite précédemment avec un dispositif optique comprenant les trois lentilles fournit un faisceau résultant segmenté pouvant correspondre à la figure 1, avec une netteté suffisante et un contour 61 de zone 6 de tunnel ombragé peu coloré. De préférence, le système comprend en outre une unité de pilotage de l'activation sélective des éléments émissifs de lumière

Le système peut comporter des moyens de traitement informatique, en particulier avec un processeur et une mémoire non volatile pour le stockage d'instructions de programme d'ordinateur permettant les opérations de détermination des éléments émissifs à activer et des éléments émissifs à désactiver selon le faisceau à former et des zones d'ombre à préserver.

L'invention n'est limitée que par les revendications ci-jointes.

## Revendications

1. Dispositif optique de projection de faisceaux lumineux apte à coopérer avec une source de lumière pixelisée comprenant une pluralité d'éléments émissifs (1) activables sélectivement, **caractérisé en ce qu'**il consiste en, successivement dans le sens du trajet de rayons lumineux (11) issus de la source : une première lentille (2) convergente, une deuxième lentille (3) divergente ou neutre, une pupille (4) et une troisième lentille (5) convergente.

2. Dispositif selon la revendication précédente, dans lequel la première lentille (2) est une lentille ménisque.

3. Dispositif selon la revendication 1 ou la revendication 2, dans lequel la deuxième lentille (3) est une lentille ménisque.

4. Dispositif selon l'une quelconque des revendications précédentes, dans lequel la troisième lentille (5) est une lentille à indice de réfraction homogène.

5. Dispositif selon l'une quelconque des revendications précédentes, dans lequel la deuxième lentille (3) présente une face de sortie (32) ayant un centre localisé sur l'axe optique du dispositif, dans lequel la troisième lentille (5) présente une face d'entrée (51) ayant un centre localisé sur l'axe optique du dispositif, et dans lequel la pupille (4) est disposée de manière à ne pas être au contact de la face de sortie (32) de la deuxième lentille (3) et de la face d'entrée (51) de la troisième lentille (5).

6. Dispositif selon la revendication précédente, dans lequel la pupille (4) est disposée à une distance du centre de la face de sortie (32) de la deuxième lentille (3) comprise entre 25% et 75% de la distance entre le centre de la face de sortie (32) et le centre de la face d'entrée (51) de la troisième lentille (5).

7. Dispositif selon la revendication précédente, dans lequel la pupille (4) est disposée à une distance du centre de la face de sortie (32) de la deuxième lentille (3) comprise entre 45% et 55% de la distance entre le centre de la face de sortie (32) et le centre de la face d'entrée (51) de la troisième lentille (5).

8. Dispositif selon la revendication 6 ou 7, dans lequel la pupille est au contact de la bordure de la face de sortie (32) de la deuxième lentille (3).

9. Module comprenant un dispositif selon l'une quelconque des revendications précédentes, et une source de lumière pixelisée dotée d'une pluralité d'éléments émissifs (1) activables sélectivement, et configuré pour émettre un faisceau lumineux segmenté.

10. Module selon la revendication précédente, dans lequel la première lentille (2) comprend une face d'entrée recevant directement la lumière de la source de lumière pixélisée.

11. Module selon l'une des deux revendications précédentes, dans lequel la troisième lentille (5) est configurée pour produire une projection du faisceau lumineux segmenté en avant d'un véhicule.

12. Module selon l'une des trois revendications précédentes, comprenant une unité de pilotage de l'activation de chacun des éléments émissifs, configurée pour produire au moins une zone sombre dans un faisceau projeté par désactivation d'un groupe d'éléments émissifs adjacents, l'unité de pilotage étant configurée pour déterminer le nombre d'éléments émissifs du groupe d'éléments émissifs adjacents correspondant à la zone sombre en fonction de la dimension en largeur des éléments émissifs.

13. Module selon l'une quelconque des quatre revendications précédentes, dans lequel le faisceau lumineux réalise au moins une partie d'un faisceau global de type feu de route.

## Patentansprüche

1. Optische Vorrichtung zum Projizieren von Lichtstrahlen, die mit einer pixelierten Lichtquelle interagieren kann, die eine Vielzahl von selektiv aktivierbaren emittierenden Elementen (1) umfasst, **dadurch gekennzeichnet, dass** sie in Richtung des von der Quelle erzeugten Lichtstrahlengangs (11) nacheinander aus folgenden Elementen besteht: einer konvergenten ersten Linse (2), einer divergenten oder neutralen zweiten Linse (3), einer Pupille (4) und einer konvergenten dritten Linse (5).

2. Die Vorrichtung nach dem vorstehenden Anspruch, wobei die erste Linse (2) eine Meniskuslinse ist.

3. Vorrichtung nach Anspruch 1 oder Anspruch 2, wobei die zweite Linse (3) eine Meniskuslinse ist.

4. Vorrichtung nach einem der vorstehenden Ansprüche, wobei die dritte Linse (5) eine Linse mit einheitlichem Brechungsindex ist.

5. Vorrichtung nach einem der vorstehenden Ansprüche, wobei die zweite Linse (3) eine Austrittsfläche (32) mit einem Mittelpunkt auf der optischen Achse der Vorrichtung aufweist, wobei die dritte Linse (5) eine Eintrittsfläche (51) mit einem Mittelpunkt auf der optischen Achse der Vorrichtung aufweist und wobei die Pupille (4) so angeordnet ist, dass sie weder mit der Austrittsfläche (32) der zweiten Linse (3) noch mit der Eintrittsfläche (51) der dritten Linse (5) in Kontakt kommt.

6. Vorrichtung nach dem vorstehenden Anspruch, wobei die Pupille (4) in einem Abstand vom Mittelpunkt der Austrittsfläche (32) der zweiten Linse (3) angeordnet ist, der zwischen 25 % und 75 % des Abstands zwischen dem Mittelpunkt der Austrittsfläche (32) und dem Mittelpunkt der Eintrittsfläche (51) der dritten Linse (5) beträgt.

7. Vorrichtung nach dem vorstehenden Anspruch, wobei die Pupille (4) in einem Abstand vom Mittelpunkt der Austrittsfläche (32) der zweiten Linse (3) angeordnet ist, der zwischen 45 % und 55 % des Abstands zwischen dem Mittelpunkt der Austrittsfläche (32) und dem Mittelpunkt der Eintrittsfläche (51) der dritten Linse (5) beträgt.

8. Vorrichtung nach Anspruch 6 oder 7, wobei die Pupille mit dem Rand der Austrittsfläche (32) der zweiten Linse (3) in Kontakt steht.

9. Modul, das eine Vorrichtung gemäß einem der vorstehenden Ansprüche und eine pixelierte Lichtquelle umfasst, die mit einer Vielzahl von selektiv aktivierbaren emittierenden Elementen (1) ausgestattet ist und so konfiguriert ist, dass sie einen segmentierten Lichtstrahl emittiert.

10. Modul nach dem vorstehenden Anspruch, wobei die erste Linse (2) eine Eintrittsfläche umfasst, die direkt Licht von der pixelierten Lichtquelle empfängt.

11. Das Modul nach einem der beiden vorstehenden Ansprüche, wobei die dritte Linse (5) so konfiguriert ist, dass sie eine Projektion des segmentierten Lichtstrahls vor einem Fahrzeug erzeugt.

12. Modul nach einem der drei vorstehenden Ansprüche, mit einer Einheit zum Ansteuern der Aktivierung jedes der emittierenden Elemente, die so konfiguriert ist, dass sie mindestens einen dunklen Bereich in einem projizierten Strahl erzeugt, indem sie eine Gruppe benachbarter emittierender Elemente deaktiviert, wobei die Ansteuereinheit so konfiguriert ist, dass sie die Anzahl der emittierenden Elemente der Gruppe benachbarter emittierender Elemente, die dem dunklen Bereich entsprechen, in Abhängigkeit von der Breitenabmessung der emittierenden Elemente bestimmt.

13. Das Modul gemäß einem der vier vorstehenden Ansprüche, wobei der Lichtstrahl mindestens einen Teil eines gesamten Fernlichts bildet.

## Claims

1. An optical device for projecting light beams that is able to interact with a pixelated light source comprising a plurality of selectively activatable emissive elements (1), **characterized in that** it consists of, successively in the direction of the path of light rays (11) generated by the source: a convergent first lens (2), a divergent or neutral second lens (3), a pupil (4), and a convergent third lens (5).

2. The device as claimed in the preceding claim, wherein the first lens (2) is a meniscus lens.

3. The device as claimed in claim 1 or claim 2, wherein the second lens (3) is a meniscus lens.

4. The device as claimed in any one of the preceding claims, wherein the third lens (5) is a lens of uniform refractive index.

5. The device as claimed in any one of the preceding claims, wherein the second lens (3) has an exit face (32) having a center located on the optical axis of the device, wherein the third lens (5) has an entrance face (51) having a center located on the optical axis of the device, and wherein the pupil (4) is placed so as not to make contact with the exit face (32) of the second lens (3) and with the entrance face (51) of the third lens (5).

6. The device as claimed in the preceding claim, wherein the pupil (4) is placed at a distance from the center of the exit face (32) of the second lens (3) comprised between 25% and 75% of the distance between the center of the exit face (32) and the center of the entrance face (51) of the third lens (5).

7. The device as claimed in the preceding claim, wherein the pupil (4) is placed at a distance from the center of the exit face (32) of the second lens (3) comprised between 45% and 55% of the distance between the center of the exit face (32) and the center of the entrance face (51) of the third lens (5).

8. The device as claimed in claim 6 or 7, wherein the pupil makes contact with the edge of the exit face (32) of the second lens (3).

9. A module comprising a device as claimed in any one of the preceding claims, and a pixelated light source that is equipped with a plurality of selectively activatable emissive elements (1), and that is configured to emit a segmented light beam.

10. The module as claimed in the preceding claim, wherein the first lens (2) comprises an entrance face directly receiving light from the pixelated light source.

11. The module as claimed in one of the two preceding claims, wherein the third lens (5) is configured to produce a projection of the segmented light beam in front of a vehicle.

12. The module as claimed in one of the three preceding claims, comprising a unit for driving the activation of each of the emissive elements that is configured to produce at least one dark region in a projected beam by deactivating a group of adjacent emissive elements, the driving unit being configured to determine the number of emissive elements of the group of adjacent emissive elements corresponding to the dark region depending on the widthwise dimension of the emissive elements.

13. The module as claimed in any one of the four preceding claims, wherein the light beam forms at least part of an overall high beam.
